# EUROPEAN PATENT APPLICATION

(11) **EP 2 645 773 A1**
(43) Date of publication of application: **02.10.2013**
(21) Application number: 12360024.9
(22) Date of filing: 27.03.2012
(51) Int. Cl.: H04W 36/00

(54) **Managing handover**

(71) Applicant: Alcatel Lucent, 75007 Paris (FR)
(72) Inventor: Worrall, Chandrika K., Newbury Berskhire RG14 6SN (GB); Palat, Sudeep K., Grange Park Swindon SN5 6EE (GB)
(74) Representative: Script IP Limited

(57) **Abstract**

A user equipment method, user equipment and a computer program product are disclosed. The user equipment method, comprises the steps of: identifying whether the user equipment has prioritised an interest in a service provided by a wireless telecommunications network supporting communications with the user equipment; and if so, preventing reporting of an indication of a detected proximity to a non-serving cell of the wireless telecommunications network when it is judged that handover to the non-serving cell as a result of reporting said indication is likely to fail to support the service prioritised by the user equipment. In this way, the user equipment may stop the proximity of a detected cell being reported to the network when it is considered by the user equipment that the detected cell is not likely to support the service prioritized by the user equipment. This helps to prevent the handover procedure being initiated with a cell which is unlikely to be able to continue to provide the service considered to be important to the user equipment. This helps to ensure that the user equipment remains supported by cells which are able to continue to provide the service which is considered by the user equipment to be important and prevents handover back and forth between cells which may otherwise lead to interruption in the service reception.

## Description

### FIELD OF THE INVENTION

The present invention relates to a user equipment method, user equipment and a computer program product.

### BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells with within a wireless telecommunications network. Such smaller sized cells are sometimes referred to as small cells, microcells, picocells femtocells. One way to establish a small cell is to provide a small cell base station that provides coverage having a relatively limited range compared to that of a macro cell. The transmission power of a small cell base station is relatively low and, hence, each small cell provides a small coverage area and covers, for example, an office or a home. Small cells may be provided within a macro cell or outside of the coverage area of any macro cells.

Information and data transmitted by the base station to the user equipment occurs on channels of radio carriers known as downlink carriers. Information and data transmitted by user equipment to the base station occurs on uplink data channels of radio carriers known as uplink carriers.

Services such as, for example, multi-media broadcast/multi-media services (MBMS) may be provided to user equipment. In particular, user equipment which are capable of receiving services may indicate those services which may be of interest to the user equipment. The user equipment will then attempt to receive the services of interest on carriers which are indicated as carrying those services of interest.

As user equipment roams around the network, the strength of the signals provided by the different cells can vary and it may become advantageous to handover the user equipment from one cell to another.

Although handing over user equipment from cell to cell can provide advantages, unexpected consequences can also occur.

Accordingly, it is desired to provide an improved technique for managing handover.

### SUMMARY

According to a first aspect, there is provided a user equipment method, comprising the steps of: identifying whether the user equipment has prioritised an interest in a service provided by a wireless telecommunications network supporting communications with the user equipment; and if so, preventing reporting of an indication of a detected proximity to a non-serving cell of the wireless telecommunications network when it is judged that handover to the non-serving cell as a result of reporting said indication is likely to fail to support the service prioritised by the user equipment.

The first aspect recognizes that a problem with existing techniques for managing handover is that this can result in the loss of a service to the user equipment which has been identified as being important to the user equipment. In particular, the provision of legacy network nodes within the wireless telecommunications network can lead to the network being unaware of the interest that the user equipment has in receiving a service. Also, even if the network is aware that the user equipment is interested in receiving a service, the network may still decide to initiate a handover to a cell which may not support the service which has been prioritized by the user equipment as being important. This can lead to the user equipment being handed over back and forth between cells which do and do not provide the prioritized service, which causes additional traffic and results in an interruption to or a loss of the service.

Accordingly, a method for user equipment may be provided. The method may comprise the step of identifying whether the user equipment has prioritized an interest in a service which is provided by the wireless telecommunications network with which the user equipment may communicate. When it is determined that the user equipment has prioritized an interest in a service, the reporting is prevented of an indication of a detected proximity to a non-serving cell when it is expected that the non-serving cell detected is unlikely to support the service prioritized by the user equipment.

In this way, the user equipment may stop the proximity of a detected cell being reported to the network when it is considered by the user equipment that the detected cell is not likely to support the service prioritized by the user equipment. This helps to prevent the handover procedure being initiated with a cell which is unlikely to be able to continue to provide the service considered to be important to the user equipment. This helps to ensure that the user equipment remains supported by cells which are able to continue to provide the service which is considered by the user equipment to be important and prevents handover back and forth between cells which may otherwise lead to interruption in the service reception.

In one embodiment, it is judged that that the non-serving cell is likely to fail to support the service prioritised by the user equipment when a frequency of the non-serving cell differs from a frequency of a serving cell supporting communications with the user equipment. It is considered likely that neighbouring cells transmitting on a different frequency are unlikely to be providing the service prioritized by the user equipment since this service would typically be transmitted on the same frequency. In addition, the user equipment may be interested in a service provided on a different frequency and switching to a different frequency may preclude the user equipment from continuing to receive the service after being handed over to the detected cell even if the detected cell blanks the sub-frames used for service transmission in order to allow service transmissions to continue to be received from neighbouring cells.

In one embodiment, it is judged that the non-serving cell is likely to fail to support the service prioritised by the user equipment when it is determined that the non-serving cell does not provide the service.

In one embodiment, the step of preventing further comprises preventing reporting of the indication of the detected proximity to the non-serving cell of the wireless telecommunications network when it is determined that a service continuity functionality is not supported by the wireless telecommunications network. Accordingly, the user equipment may inhibit the transmission of the indication of the detected proximity of the non-serving cell when it is established that the network nodes do not support connected mode service continuity. If the network nodes do not support service continuity, then it can be assumed that the service requirements of the user equipment will not be taken into account when determining whether to handover the user equipment to the detected cell. Hence, it is likely that the user equipment will be handed over to a cell which may not provide the prioritized service.

In one embodiment, it is determined that the service continuity functionality is not supported by the wireless telecommunications network based on at least one message received from the wireless telecommunications network. The user equipment may identify that service continuity is or is not supported based on configuration messages transmitted during the establishment of a connection with the network nodes of the wireless telecommunications network.

In one embodiment, it is identified that the user equipment has prioritised an interest in a service when receiving the service. Accordingly, it may be assumed that the user equipment has prioritized an interest in a service when receiving that service. In other words, the act of receiving the service indicates that the service has a higher priority than other functions of the user equipment.

In one embodiment, it is identified that the user equipment has prioritised an interest in a service based on user equipment settings. Accordingly, the user equipment itself may configure the priority of a service.

In one embodiment, it is identified that the user equipment has prioritised an interest in a service based on user equipment settings generated in response to at least one of user input and user equipment application settings. Accordingly, the user may provide an indication to the user equipment of the relative priorities or an application may prioritize a service upon execution of that application.

In one embodiment, the method comprises the step of reporting of the indication of the detected proximity to the non-serving cell of the wireless telecommunications network when the user equipment has failed to prioritise an interest in a service.

In one embodiment, the step of reporting of the indication comprises at least one of transmitting a proximity indicator and transmitting a measurement report.

In one embodiment, the serving cell comprises a macro cell and the non-serving cell comprises a small cell.

In one embodiment, the service comprises a multi-media broadcast/multi-media service.

According to a second aspect, there is provided a user equipment, comprising: identification logic operable to identify whether the user equipment has prioritised an interest in a service provided by a wireless telecommunications network supporting communications with the user equipment; and logic operable, in response to the identification logic identifying that the user equipment has prioritised an interest in a service, to prevent reporting of an indication of a detected proximity to a non-serving cell of the wireless telecommunications network when it is judged that the non-serving cell is likely to fail to support the service prioritised by the user equipment.

In one embodiment, it is judged that that the non-serving cell is likely to fail to support the service prioritised by the user equipment when a frequency of the non-serving cell differs from a frequency of a serving cell supporting communications with the user equipment.

In one embodiment, it is judged that the non-serving cell is likely to fail to support the service prioritised by the user equipment when it is determined that the non-serving cell does not provide the service.

In one embodiment, the logic is operable to prevent reporting of the indication of the detected proximity to the non-serving cell of the wireless telecommunications network when it is determined that a service continuity functionality is not supported by the wireless telecommunications network.

In one embodiment, it is determined that the service continuity functionality is not supported by the wireless telecommunications network based on at least one message received from the wireless telecommunications network.

In one embodiment, the identification logic is operable to identify that the user equipment has prioritised an interest in a service when receiving the service.

In one embodiment, the identification logic is operable to identify that the user equipment has prioritised an interest in a service based on user equipment settings.

In one embodiment, the identification logic is operable to identify that the user equipment has prioritised an interest in a service based on user equipment settings generated in response to at least one of user input and user equipment application settings.

In one embodiment, the logic is operable to report the indication of the detected proximity to the non-serving cell of the wireless telecommunications network when the user equipment has failed to prioritise an interest in a service.

In one embodiment, the logic is operable to report the indication by at least one of transmitting a proximity indicator and transmitting a measurement report.

In one embodiment, the serving cell comprises a macro cell and the non-serving cell comprises a small cell.

In one embodiment, the service comprises a multi-media broadcast/multi-media service.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a currently specified proximity indication procedure;
Figure 2 illustrates a proximity indication procedure for networks supporting service continuity; and
Figure 3 illustrates a proximity indication procedure according to one embodiment.

### DESCRIPTION OF THE EMBODIMENTS

### Overview

Before discussing embodiments in any more detail, first an overview will be provided. As mentioned above, in some circumstances, the network may handover user equipment to a cell which does not support a service prioritized by that user equipment. To avoid this, the user equipment is prevented from reporting the proximity of a cell judged by the user equipment not to support the service prioritized by the user equipment.

In particular, under current standards, user equipment is required to inform the network of its proximity to a non-serving cell (such as a closed subscriber group (CSG) cell) when in the vicinity of the non-serving cell. After receiving the user equipment's proximity indication, the network may then perform handover of the user equipment to the non-serving cell following additional handover steps.

If the user equipment is handed over to a cell which supports connected mode service continuity, the cell is aware of the user equipment's service reception state.

Although various triggers are currently specified in the standards, the network does not currently handover the user equipment to a cell as a result of service reception in the current cell. Therefore, the current user equipment behaviour with respect to the proximity indication procedure doesn't require to be modified. However, if a CSG cell handed over a user equipment to a macro cell due to MBMS service continuity and the macro cell doesn't support the connected mode service continuity, the network has no knowledge of whether the user equipment is receiving an MBMS service in the current cell. Upon configuration of the proximity indication, the current standards require that the user equipment will indicate the proximity to the CSG cell. Thus, the network may handover the user equipment to the CSG cell without even considering whether the user equipment is receiving an MBMS service in the current cell. This can result in handover ping-pong between the CSG cell and non-CSG cell. Such handover back and forth results in an interruption to the MBMS service reception given that the MBMS service is typically not provided in CSG cells.

In order to avoid the handover ping-pong and service interruption, a new trigger for proximity indication is provided which considers the user equipment interest in a service and the detection of a small cell such as, for example, a CSG cell.

Accordingly, a method of triggering the transmission of a proximity indicator by user equipment which informs the network of the proximity to the user equipment of a cell such as, for example, a small cell such as a CSG cell is provided in that the trigger is based on information about the service status of the user equipment and/or the service continuity support of the network. The information about the service status of the user equipment may comprise that the service continuity is supported by the network. The information about service status may comprise that the user equipment is receiving a service such as, for example, an MBMS service. The information about a service status may comprise that the user equipment is willing to prioritize unicast reception over service reception such as, for example, MBMS reception. Hence, the user equipment may only transmit the trigger if the user equipment is not receiving a service such as an MBMS service and/or is willing to prioritize unicast reception of the service reception such as MBMS reception. The trigger may further take into account whether the proximate cell is on the same frequency as the user equipment's current serving cell or is on a different,frequency. In particular, the trigger may only be based on information that the service status of the user equipment if the proximate cell is on a different frequency to the user equipment's current serving cell.

By avoiding the transmission of an indication of the proximity of another cell when it is judged that the other cell may not support the service prioritized by the user equipment, the likelihood of the network handing over the user equipment to a cell which is unlikely to support that service is reduced. This helps to increase the reliability of the user equipment being able to continue to receive the service.

### Current proximity indication procedure

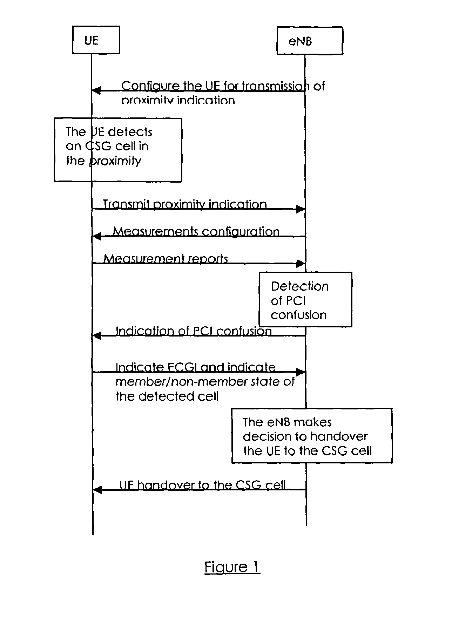

Figure 1 illustrates the currently specified proximity indication procedure. It will be appreciated that not all base stations are capable of supporting user equipment handover to CSG cells, particularly in the situation where an x2 interface between the CSG cell and base station is absent.

If the base station is capable of handover to CSG cell support, the base station configures the user equipment (in RRC_connected mode) so that a proximity indication message is sent upon the detection of CSG cell in the user equipment's proximity. If the proximity indication is configured, the user equipment required to transmit the proximity indication to the network whenever a non-serving cell such as a CSG cell is detected in proximity.

Upon the reception of a "proximity indication" from the user equipment, the network configures measurements to be performed for the detected cell. For example, measurement gaps may be configured when the detected cell is on another frequency. The user equipment measures the quality of the received signal from the detected cell. The measurement criterion is based on either Reference Signal Received Quality (RSRQ) or Reference Signal Received Power (RSRP), as configured by the network.

Measurements are indicated per cell, and the cells are identified by a Physical Cell Identity (PCI). In the scenario that the same PCI is used for more than one base station in the area, PCI confusion may result. This means that the detected cell could not be uniquely identified based on the PCI. If possible PCI confusion is detected by the network, the base station request the user equipment to signal the Evolved Universal Terrestrial Radio Access Network (E-UTRAN) Cell Global Identifier (ECGI) of the detected cell. It will be appreciate that a cell can be uniquely identified with the ECGI. Upon the resolving the PCI confusion, the network may make the decision to handover the user equipment to the detected CSG cell based on the received measurement reports.

This procedure is designed to allow the user equipment to be served by the best cell hence improve service quality and system performance.

### Service Reception Continuity

Support of service continuity for service reception such as MBMS reception is a consideration. CSG cells may not participate in service transmission, such as MBMS transmission. Therefore, it is not guaranteed whether the user equipment will receive the service, such as the MBMS service while connected to the CSG cell. However in some scenarios, even though the CSG cell is not broadcasting service, such as MBMS services, the cell may blank the subframe used for the service transmission, such as the MBMS transmission, from intra-frequency neighbouring cells. The interference on the service transmission, such as the MBSFN transmission on MBMS subframe is mitigated by blanking the subframes in the CSG cell. Therefore, in such a scenario, the user equipment may be able to receive MBMS while in CSG cell from the intra-frequency neighbouring cells.

For Rel-11 equipment, RRC_Connected user equipment transmits an MBMSInterestIndication message to the base station indicating that the user equipment is receiving or is interested in receiving a service such as an MBMS service on a frequency. Upon reception of the MBMSInterestIndication message, the base station may decide to handover the user equipment to the indicted MBMS frequency such that the user equipment will be able to receive the interested MBMS service. This means that the pre-Rel-11 networks are not able to receive MBMSInterestIndication messages or handover the user equipment to the interested MBMS frequency for MBMS reception.

However, not all the Rel-11 base stations implement and support the reception of the MBMSInterestIndication message, i.e.: MBMS service continuity for RRC_Connected mode user equipment may not be supported by the base station.

Moreover, if the non-serving cell such as the CSG cell is the best cell for the current frequency, the network may handover the user equipment to the CSG cell, even though this means the user equipment may not be able to receive its interested MBMS service. However, such handover is required to guarantee the unicast connections. Normally unicast services are considered by the operator to be a higher priority than the MBMS service. However, it is also possible that the MBMS service may be considered to be a higher priority than unicast service by the operator. The user equipment may also decide that service reception, such as MBMS reception is a higher priority than the unicast services.

Accordingly, it can be seen that the network decides to handover user equipment to a non-serving cell such as a CSG cell considering many factors such as signal quality of the CSG cell, MBMS reception status, MBMS reception possibility while connected to CSG cell, the user willingness to prioritise MBMS over unicast, or the operator business mode, the network implementation and radio resource management algorithm to name a few parameters.

A Rel-11 base station which supports MBMS service continuity for RRC_Connected user equipment may inform the network support of the above feature by configuring the user equipment for transmission of MBMSInterestIndication similar to the configuration of proximity indication. Alternatively, the support of MBMS service continuity may also be broadcast in the network or may be derived from a MBMS service continuity specific parameter such MBMS Service Area Identifiers (SAIs) agreed to be broadcast in the cell. The specific mechanism to inform the user equipment of the MBMS support by the base station may vary. However, whether the MBMS service continuity for RRC_Connected user equipment is supported by the rel-11 base station will be known to the user equipment. Given that, the user equipment will transmit MBMSInterestIndication to a Rel-11 base station which supports MBMS service continuity for RRC_Connected user equipment. If the proximity detection is configured, upon the detection of a CSG cell, the user equipment will inform the base station of the CGS proximity. The base station has all the necessary information to make the handover decision considering both the MBMS reception and CSG cell quality, hence, unicast reception. For this scenario to work, the current proximity indication procedure described earlier remains unmodified.

However, if the user equipment is receiving a MBMS service from a pre-rel-11 base station, or a network which doesn't support MBMS service continuity for RRC_Connected user equipment, the base station doesn't receive or may not be capable of decoding MBMSInterestIndication. Therefore, the base station is not aware of the user equipment's MBMS reception. However, the network may support proximity procedure hence the user equipment will be configured with the proximity indication. If the current standards are followed, the user equipment will indicate its proximity to the CSG cell upon detection and consequently the network may make the decision to handover the user equipment to the CSG cell which would be resulted in loss of MBMS reception by the user equipment.

### Modified Handover Procedure

Embodiments provide a modified procedure for proximity indication which takes into account the MBMS or other service interest by the user equipment and the MBMS or other service continuity support by the network.

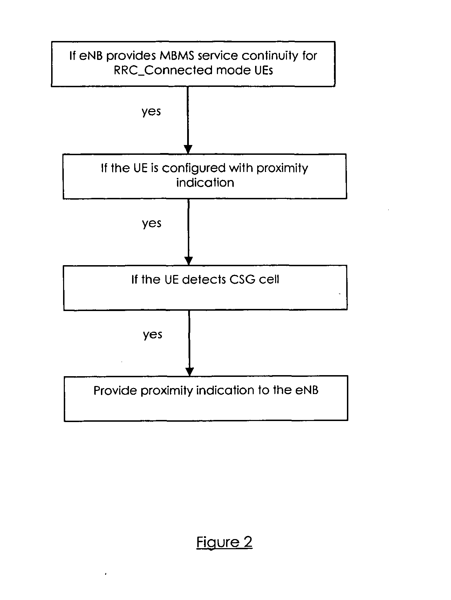

If the MBMS service continuity for RRC_connected user equipment is supported by the network, the user equipment performs the proximity indication procedure and the MBMSInterestIndication procedure mentioned above to the network with no modification. In this scenario, the base station makes the handover decision for the user equipment taking into account the user equipment's MBMS reception as shown in Figure 2.

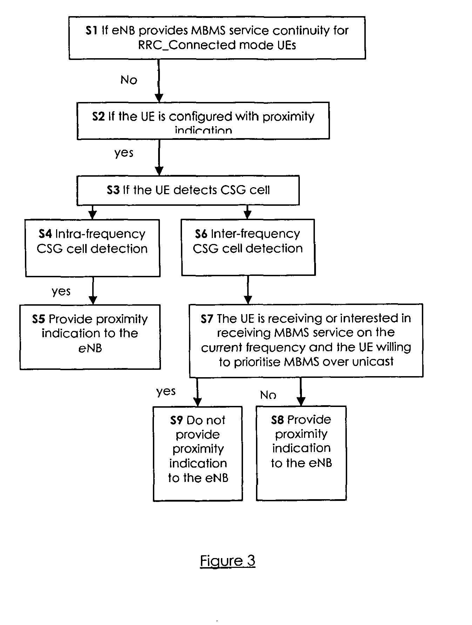

However, if the MBMS service continuity for RRC_connected user equipment is not supported by the network, the user equipment performs a modified proximity indication procedure. The modified proximity indication procedure takes into account the MBMS or other service reception and detected CSG or other non-serving cell type (both intra-frequency and inter-frequency) in the triggering of a proximity indication message to the network upon the detection of the CSG cell. This modified procedure is illustrated in Figure 3.

As can be seen, for a detected intra-frequency CSG or other cell, the user equipment transmits the proximity indication regardless whether the user equipment is receiving MBMS or other service or not. For a detected inter-frequency CSG or other cell, the user equipment only transmits the proximity indication to the base station if the user equipment is not receiving an MBMS or other service or if the user equipment is willing to prioritised unicast over MBMS or other service reception.

In particular, at step S1 the user equipment decides whether the base station provides MBMS or other service continuity for RRC_connected mode user equipment. If the base station does not provide MBMS service continuity, then processing proceeds to step S2. Otherwise, processing reverts to the procedure shown in Figure 2.

At step S2, it is determined whether the user equipment is configured to provide proximity indications. If the user equipment is configured to provide proximity indications then processing proceeds to step S3.

At step S3, it is decided whether the user equipment has detected the proximity of a CSG or other neighbouring cell. If the user equipment detects the proximity of another cell, then a determination is made of whether the frequency of the detected cell is the same as the frequency of the current serving cell or a different frequency.

Accordingly, if it is determined at step S4 that the frequency of the detected cell is the same as that of the currently serving cell then processing proceeds to step S5.

At step S5, the user equipment provides a proximity indication to the base station. The user equipment can do this because it is likely that the user equipment may be able to continue to receive the service from neighbouring cells even if the detected cell is not provide that service, particularly when the detected cell blanks subframes during the transmission of the service.

At step S5, it is determined whether the frequency of the detected cell differs from the frequency of the currently serving cell. If the frequencies differ, then processing proceeds to step S7.

At step S7, a determination is made of whether the user equipment is either interested in receiving or actually receiving a service on the current frequency and/or that the user equipment wishes to prioritize that service over any unicast transmissions. If the user equipment is not receiving or is not interested in receiving a service or is not willing to prioritize that service over unicast transmissions then processing proceeds to step S8.

At step S8, the proximity indication is provided to the base station. The base station may then subsequently initiate the handover procedure and handover the user equipment to the detected cell but, given that the user equipment is not interested in receiving a service that may be disrupted by that handover, such a handover is not detrimental to the user equipment.

However, if it is decided that the user equipment is interested in receiving or is receiving a service or the user equipment is willing to prioritize that service over unicast transmissions, then processing proceeds to step S9.

At step S9, the transmission of the proximity indicator is prevented or inhibited. This prevents the user equipment informing the base station that it has detected a cell to which the user equipment may be handed over to because there is a high likelihood that handling the user equipment over to that cell will result in the loss or interruption to a service which is considered important to the user equipment.

Although the embodiments mentioned above described preventing the transmission of the proximity indicator, it will be appreciated that the user equipment may prevent the transmission of any messages required to effect handover. Preventing the transmission of the proximity indicator message is particularly efficient since this is an early message in the handover procedure and therefore prevents unnecessary traffic and unnecessary processing.

Accordingly, it can be seen that a new trigger is provided for transmission of the proximity indication or other handover message to the network. The new trigger is based not only on the detection of a neighbouring cell but also considers the service the user equipment is receiving all is willing to receive. With this approach, the possible ping-pong handover between cells due to the user equipment's interested service reception is obviated. Furthermore, this approach avoids the possible interruption to the user equipment's interest service which helps to improve user satisfaction.

Even though, the above description is based on proximity indication to the CSG cell, the invention is equally applicable for a detection of any small cell (e.g.: Pico cells) or even macro cells.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment method, comprising the steps of:
identifying whether said user equipment has prioritised an interest in a service provided by a wireless telecommunications network supporting communications with said user equipment; and
if so, preventing reporting of an indication of a detected proximity to a non-serving cell of said wireless telecommunications network when it is judged that handover to said non-serving cell as a result of reporting said indication is likely to fail to support said service prioritised by said user equipment.

2. The method of claim 1, wherein it is judged that that said non-serving cell is likely to fail to support said service prioritised by said user equipment when a frequency of said non-serving cell differs from a frequency of a serving cell supporting communications with said user equipment.

3. The method of claim 1, wherein it is judged that said non-serving cell is likely to fail to support said service prioritised by said user equipment when it is determined that said non-serving cell does not provide said service.

4. The method of any one of claims 1 to 3, wherein said step of preventing further comprises preventing reporting of said indication of said detected proximity to said non-serving cell of said wireless telecommunications network when it is determined that a service continuity functionality is not supported by said wireless telecommunications network.

5. The method of claim 4, wherein it is determined that said service continuity functionality is not supported by said wireless telecommunications network based on at least one message received from said wireless telecommunications network.

6. The method of any preceding claim, wherein it is identified that said user equipment has prioritised an interest in a service when receiving said service.

7. The method of any preceding claim, wherein it is identified that said user equipment has prioritised an interest in a service based on user equipment settings.

8. The method of any preceding claim, wherein it is identified that said user equipment has prioritised an interest in a service based on user equipment settings generated in response to at least one of user input and user equipment application settings.

9. The method of any preceding claim, comprising the step of reporting of said indication of said detected proximity to said non-serving cell of said wireless telecommunications network when said user equipment has failed to prioritise an interest in a service.

10. The method of claim 9, wherein said step of reporting of said indication comprises at least one of transmitting a proximity indicator and transmitting a measurement report.

11. The method of any preceding claim, wherein said serving cell comprises a macro cell and said non-serving cell comprises a small cell.

12. The method of any preceding claim, wherein said service comprises a multi-media broadcast/multi-media service.

13. User equipment, comprising:
identification logic operable to identify whether said user equipment has prioritised an interest in a service provided by a wireless telecommunications network supporting communications with said user equipment; and
logic operable, in response to said identification logic identifying that said user equipment has prioritised an interest in a service, to prevent reporting of an indication of a detected proximity to a non-serving cell of said wireless telecommunications network when it is judged that said non-serving cell is likely to fail to support said service prioritised by said user equipment.

14. A computer program product operable, when executed on a computer, to perform the method steps of any one of claims 1 to 13.

## Amended claims

### Amended claims in accordance with Rule 137(2) EPC.

**1.** A user equipment method, comprising the steps of:
identifying (S7) whether said user equipment has prioritised an interest in a service provided by a wireless telecommunications network supporting communications with said user equipment; and
if so, preventing reporting (S9) of an indication of a detected proximity to a non-serving cell of said wireless telecommunications network when it is judged that handover to said non-serving cell as a result of reporting said indication is likely to fail to support said service prioritised by said user equipment.

**2.** The method of claim 1, wherein it is judged that that said non-serving cell is likely to fail to support said service prioritised by said user equipment when a frequency of said non-serving cell differs from a frequency of a serving cell supporting communications with said user equipment.

**3.** The method of claim 1, wherein it is judged that said non-serving cell is likely to fail to support said service prioritised by said user equipment when it is determined that said non-serving cell does not provide said service.

**4.** The method of any one of claims 1 to 3, wherein said step of preventing further comprises preventing reporting of said indication of said detected proximity to said non-serving cell of said wireless telecommunications network when it is determined that a service continuity functionality is not supported by said wireless telecommunications network.

**5.** The method of claim 4, wherein it is determined that said service continuity functionality is not supported by said wireless telecommunications network based on at least one message received from said wireless telecommunications network.

**6.** The method of any preceding claim, wherein it is identified that said user equipment has prioritised an interest in a service when receiving said service.

**7.** The method of any preceding claim, wherein it is identified that said user equipment has prioritised an interest in a service based on user equipment settings.

**8.** The method of any preceding claim, wherein it is identified that said user equipment has prioritised an interest in a service based on user equipment settings generated in response to at least one of user input and user equipment application settings.

**9.** The method of any preceding claim, comprising the step of reporting of said indication of said detected proximity to said non-serving cell of said wireless telecommunications network when said user equipment has failed to prioritise an interest in a service.

**10.** The method of claim 9, wherein said step of reporting of said indication comprises at least one of transmitting a proximity indicator and transmitting a measurement report.

**11.** The method of any preceding claim, wherein said serving cell comprises a macro cell and said non-serving cell comprises a small cell.

**12.** The method of any preceding claim, wherein said service comprises a multimedia broadcast/multi-media service.

**13.** User equipment, comprising:
identification logic operable to identify whether said user equipment has prioritised an interest in a service provided by a wireless telecommunications network supporting communications with said user equipment; and
logic operable, in response to said identification logic identifying that said user equipment has prioritised an interest in a service, to prevent reporting of an indication of a detected proximity to a non-serving cell of said wireless telecommunications network when it is judged that said non-serving cell is likely to fail to support said service prioritised by said user equipment.

**14.** A computer program product operable, when executed on a computer, to perform the method steps of any one of claims 1 to 12.
